(19) **Europäisches Patentamt / European Patent Office / Office européen des brevets**

(11) **EP 4 633 067 A1**

(12) # EUROPEAN PATENT APPLICATION

(43) Date of publication:
**15.10.2025 Bulletin 2025/42**

(21) Application number: **24290009.0**

(22) Date of filing: **11.04.2024**

(51) International Patent Classification (IPC):
**H04B 17/373** (2015.01)   **H04B 17/391** (2015.01)
**H04W 64/00** (2009.01)   **H04W 84/00** (2009.01)
**H04L 25/02** (2006.01)

(52) Cooperative Patent Classification (CPC):
**H04B 17/373; H04B 17/3913; H04W 64/006; H04W 84/005;** H04B 17/347; H04B 17/364; H04L 25/0212

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
  **1119 NS  Schiphol Rijk Amsterdam (NL)**
  Designated Contracting States:
  **FR**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **Nguyen, Viet Hoa**
  **35708 RENNES CEDEX 7 (FR)**
• **Bechihi, Adel**
  **35708 RENNES CÉDEX 7 (FR)**
• **Gresset, Nicolas**
  **35708 RENNES CEDEX 7 (FR)**

(74) Representative: **Plasseraud IP**
  **104 Rue de Richelieu**
  **CS92104**
  **75080 Paris Cedex 02 (FR)**

(54) **METHOD AND SYSTEM FOR PROVIDING INFORMATION ABOUT A RADIO-COMMUNICATION CHANNEL**

(57)    A method provides information about a radio-communication channel between a transmitter (11) and a receiver (12) for a target future time instant, while at least one of the transmitter and receiver is moving. Information is inferred from at least one current or past mobility state of the pair formed by said transmitter and receiver, combined with a mobility model function relating to said pair. The method is useful for adjusting parameters of a communication session ongoing between said transmitter and receiver. It may also be useful for a radio-detection system suitable for characterizing radio interference due to a transmitter-equipped carrier (10).

FIG. 1

**Description**

The invention relates to a method for providing information about a radio-communication channel, and also to a system suitable for executing such method.

-- **BACKGROUND OF THE INVENTION** --

The radio-communication channel that is effective between a transmitter and a receiver depends on the respective positions of these transmitter and receiver, but also depends on the radio-propagation medium and elements existing in the environment. Indeed, the radio-propagation medium may cause propagation losses, in particular radio-power attenuation, and the environment may cause radio-signal reflections which alter an impulse response of the radio-communication channel. Possibly, the radio-communication channel may further depend on respective orientations of both the transmitter and the receiver. Generally, the radio-communication channel may vary with time during an ongoing communication session, or also during an ongoing detection by the receiver of the radio signals produced by the transmitter in case transmitter and receiver do not currently share a communication session.

Knowledge of features of the radio-communication channel is useful for improving the communication quality and reliability, in particular for adjusting the transmission power and/or the detection sensitivity, for possibly controlling transmission and reception directions, etc. But available systems do not allow predicting the radio-communication channel, therefore impeding optimization of transmission and/or reception parameters in advance of a future time instant.

The present invention aims a meeting such need.

-- **SUMMARY OF THE INVENTION** --

To this end, a first aspect of the present invention proposes a method for providing information about a radio-communication channel existing between a transmitter and a receiver for a target future time instant, when at least one of the transmitter and receiver is moving so that a pair formed by these transmitter and receiver transitions between successive mobility states while radio signals are emitted by the transmitter. The invention method comprises the following steps:

/1/ obtaining information about at least one current or past mobility state of the pair;

/2/ from the information about the at least one current or past mobility state of the pair, and using a mobility model function relating to this pair, inferring information about a mobility state to occur for the pair at the target future time instant; and

/3/ from the information about the mobility state to occur at the target future time instant, and using a connection between mobility state values possible for the pair and values of a feature of the radio-communication channel, inferring information about the feature of the radio-communication channel relating to the target future time instant.

So the invention method proceeds from information data relating to present and/or past mobility state(s) of the pair to infer data about the radio-communication channel as it will be effective at a future time. Thus, it does not necessarily require initial knowledge of transmission parameters that would be continually effective over the communication or detection duration. Thanks to this, the invention method is compatible with numerous radio-communication applications and conditions.

In possible implementations of the invention method, step /1/ may comprise obtaining at least one measurement result about the radio-communication channel at a time value that corresponds to the current or past mobility state of the pair, and deriving the information relating to the at least one current or past mobility state of the pair from the at least one measurement result. Hence, the invention method may be based on measurements instead of initial knowledge of transmission parameters.

The mobility model function used in step /2/ may be suitable for determining a relation between the current or past mobility state of the pair and the mobility state of this pair at the target future time instant. It may be obtained from a database. Alternatively, it may be obtained from mobility state values relating to the pair and derived respectively from results of several measurements performed with the pair at several instant times. Combinations of data read in a database and mobility state values derived for the pair respectively from results of several measurements performed with the pair at several instant times may also be implemented. In particular, the measurements may relate to the radio-communication channel as effective between the transmitter and the receiver.

The connection between the mobility states possible for the pair and the values of the feature of the radio-communication channel, as used in step /3/, may be of one of the following types:

- a path-loss function providing radio-attenuation values as a function of the respective positions of the transmitter and receiver, and combined with a statistical noise distribution;

- a fingerprint map providing radio-attenuation values as a function of the respective positions of the transmitter and receiver;

- a channel impulse response determined by modelling the radio-communication channel through ray-tracing as a function of the respective positions of the transmitter and receiver; and

- a channel impulse response determined by using a geometry-based stochastic model for modelling the radio-communication channel as a function of the respective positions and relative velocity of the transmitter and receiver.

In preferred implementations of the invention method, the information involved may be of the following types:

- the information obtained in step /1/ about the at least one current or past mobility state of the pair may comprise probability values for this pair to meet respective mobility state values at a current or past time value;

- the information inferred in step /2/ about the mobility state to occur for the pair at the target future time instant may comprise probability values for this pair to meet respective mobility state values at the target future time value; and

- the information inferred in step /3/ about the feature of the radio-communication channel relating to the target future time instant may comprise probability values for this feature to meet respective feature values at the target future time value.

Depending on contemplated application of the invention method, each mobility state of the pair may comprise at least one of respective positions of the transmitter and receiver, a relative position of the transmitter and receiver, at least one of a respective velocity component and velocity angle of the transmitter and receiver, at least one of a relative velocity component and relative velocity angle of the transmitter and receiver, respective accelerations of the transmitter and receiver, a relative acceleration of the transmitter and receiver, respective direction variation rates of the transmitter and receiver, and a variation rate of a relative direction of the transmitter and receiver.

In first possible applications of the invention method, the radio signals may contain data sent by the transmitter to the receiver, these data being useful to an operator or a data-processing device from an output of the receiver. Put another way, the radio signals may belong to an ongoing communication session shared by the transmitter and receiver.

For example, the transmitter may be on board a vehicle traveling along a road portion. Then, in case of a regular road portion, the mobility model function used in step /2/ may be based on physics laws and driver's behaviour principles related to regular-speed driving. Alternatively, if the road portion is a highway exit portion, the mobility model function used in step /2/ may be based on physics laws, at least one deceleration-then-acceleration profile and at least one motion-angle profile, both profiles as respective functions of a traveling distance in the highway exit portion.

In other possible applications of the invention method, the receiver may be part of a radio-detection system used for monitoring radio interference originating from a transmitter-equipped carrier, the radio signals being emitted by the transmitter onboard the carrier and causing the radio interference. In such other applications, data possibly contained in the radio signals are not intended to the receiver of the detection system.

A second aspect of the invention proposes a system for providing information about a radio-communication channel existing between a transmitter and a receiver, this system comprising at least the receiver and a computing node configured for executing a method according to the first invention aspect, including its above-mentioned improvements and preferred implementations.

In particular, such system may be configured for executing the invention method during an ongoing communication session shared by the transmitter and the receiver, and for adjusting at least one parameter of this communication session based on the information inferred for the target future time instant about the feature of the radio-communication channel.

Alternatively, such system may form a radio-detection system that is suitable for sensing radio emission originating from a transmitter-equipped carrier, and providing information for the target future time instant about radio interference caused by the transmitter-equipped carrier to ongoing radio-communication sessions.

These and other features of the invention will be now described with reference to the appended figures, which relate to preferred but not-limiting embodiments of the invention.

## -- BRIEF DESCRIPTION OF THE DRAWINGS --

Figure 1 illustrates a possible application of the invention;

Figure 2 shows steps of a method according to the present invention;

Figure 3 illustrates possible mobility state components for road traffic applications of the invention method;

Figures 4a and 4b are diagrams defining a possible mobility model function suitable for a first road traffic application; and

Figures 5a and 5b are other diagrams defining another possible mobility model function suitable for a second road traffic application.

## -- DETAILED DESCRIPTION OF THE INVENTION --

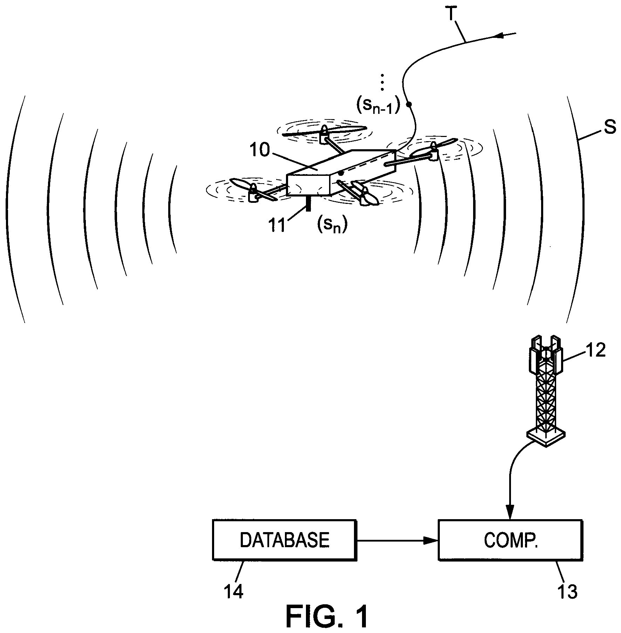

Although transmitter and receiver may each be mobile in applications of the invention, one may consider in the following application examples that the transmitter is moving and the receiver is fixed. As shown in Figure 1, a transmitter 11 is onboard a carrier 10 and emits radio signals S which are detected by a receiver 12 while the carrier 10 is moving. In the illustrated example, the carrier 10 is a drone of quadrotor type. It is flying along a trajectory T according to a sequence of successive mobility states comprising state $s_n$ occurring at time instant $t_n$ and state $s_{n+1}$ occurring at time instant $t_{n+1}$, n being an integer index for identifying successive time instants. Relative to present time, $t_n$ is current or past time instant and $t_{n+1}$ is a target future time instant. Hence, mobility state $s_{n+1}$ has not yet occurred whereas mobility state $s_n$ has occurred. The successive mobility states of the carrier 10 may be defined by corresponding three-dimensional position and velocity values, referred to as mobility state components. The receiver 12 may be a cellular base station of a flight radio-controller as examples. Reference number 13 denotes a computing node which is connected to receive measurement results and possibly data too from the receiver 12. The computing node 13, noted COMP., can access a database 14 configured for storing mobility model functions.

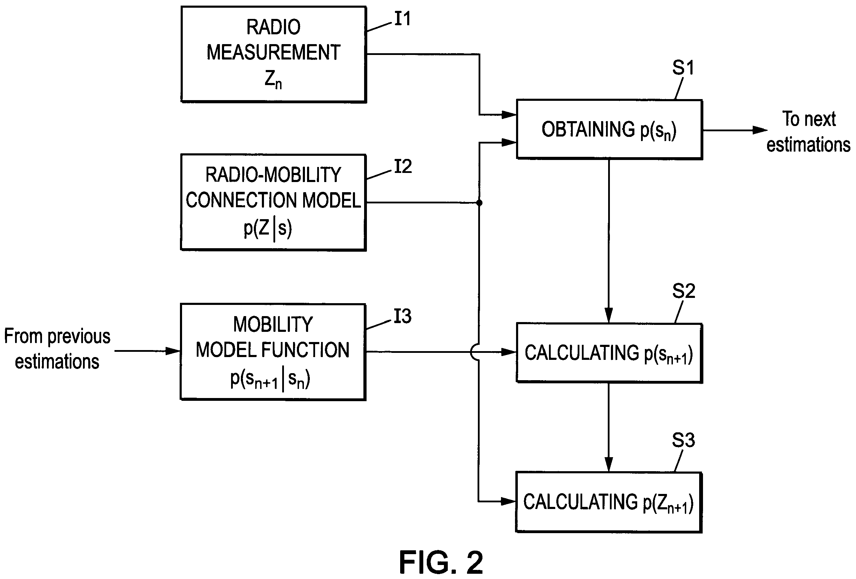

With reference to Figure 2, step S1 consists in obtaining information about mobility state $s_n$. This information may be based on measurement results related to the mobility state $s_n$, as indicated in box 11. Such measurements are noted $Z_n$ and may be radio measurements, for example reception radio-power as sensed by the receiver 12, or any other measurement type. Step S1 may also use radio parameter values possibly available at this stage of the method, for example a transmission radio-power value implemented by the transmitter 11 at time instant $t_n$. As indicated in box I2, step S1 further uses a connection between measurement value and mobility state, for example the probability $p(Z|s)$ of obtaining a measurement result Z when the pair is in a mobility state s, this probability constitutes a measurement-mobility connection model. In preferred implementations of the invention, the information obtained in step S1 may consist in probability values for the mobility state $s_n$ of the carrier 10 to meet respective mobility state values at time value $t_n$. Put another way, a probability distribution $p(s_n)$ may be obtained in step S1 for the mobility state $s_n$.

Step I3 consists in providing a mobility model function relating to the carrier 10, for example from the database 14. Such mobility model function may be expressed as a mathematical formula or set of formulae suitable for characterizing the mobility state $s_{n+1}$ from the state $s_n$. Alternatively, the mobility model function may be expressed as a list of state values associated with respective time values. The value(s) for mobility state $s_n$ and/or $s_{n+1}$ may be derived from such list through interpolation or extrapolation. But preferably, the mobility model provided in step I3 may consist in probability values for the carrier 10 to meet state values $s_{n+1}$ at time instant $t_{n+1}$ assuming it has met state value $S_n$ at time instant $t_n$: $p(s_{n+1}|s_n)$.

Step S2 combines the results of both steps S1 and I3 for inferring information about the mobility state $s_{n+1}$. This new information may be a probability distribution for values to be met by the mobility state $s_{n+1}$, In such case, values for this probability distribution may be noted as $p(s_{n+1})$ and calculated using the following formula:

$$p(s_{n+1}) = \int_{s_n} p(s_{n+1}|s_n) . p(s_n) d(s_n)$$

Finally, step S3 consists in inferring information about the radio-communication channel for time instant $t_{n+1}$ from the result of step S2. Step S3 combines the results of both steps S2 and I2 for inferring the radio-communication channel $Z_{n+1}$ for the time instant $t_{n+1}$. In such case, the information about the radio-communication channel for the time instant $t_{n+1}$ is the probability distribution $p(Z_{n+1})$, that provides respective probability values for the radio-communication channel to meet various feature values $Z_{n+1}$ at the target future time instant $t_{n+1}$. It may be calculated using the formula:

$$p(Z_{n+1}) = \int_{s_{n+1}} p(Z_{n+1}|s_{n+1}) \cdot p(s_{n+1}) d(s_{n+1})$$

Alternative implementations of the invention method may use the now-listed variations:

- in step I3, the mobility model function may be derived from results of measurements performed beforehand, for example radio measurements relating to sensed radio-power or radio-reception direction at the receiver 12;
- in step I2, the connection between the radio-communication channel and mobility state may be the path-loss function that provides radio-attenuation values as a function of the position of the carrier 10, combined with a statistical noise distribution. Then, the radio-communication channel value $Z_{n+1}$ for time instant $t_{n+1}$ may be obtained using the following path-loss function:

$$Z_{n+1} = A + B \cdot \log_{10}\left\|\left\| l_{n+1}^{(T)} - l_{n+1}^{(R)} \right\|\right\| + w_{n+1},$$

where A and B are path loss parameters, $l_{n+1}^{(T)}$ is the position of the carrier 10 at time instant $t_{n+1}$, $l_{n+1}^{(R)}$ is the position or the receiver 12 at time instant $t_{n+1}$, and $w_{n+1}$ is a shadowing noise. If this shadowing noise is to be modelled using a centred gaussian random variable with standard deviation $\sigma_{SD}$, then the probability distribution $p(Z_{n+1}|s_{n+1})$ is:

$$p(Z_{n+1}|s_{n+1}) = \frac{1}{\sqrt{2\pi\sigma_{SD}^2}} e^{-\frac{\left(Z_{n+1}-\left(A+B\cdot\log_{10}\left\|l_{n+1}^{(T)}-l_{n+1}^{(R)}\right\|\right)\right)^2}{2\sigma_{SD}^2}}$$

In this example, radio-attenuation is the feature of the radio-communication channel that is concerned with the invention implementation.

- alternatively in step I2, the connection between the radio-communication channel and mobility state may be the fingerprint map that provides the channel attenuation values for the respective position values $l_{n+1}^{(T)}$ and $l_{n+1}^{(R)}$ of the carrier 10 and receiver 12; and

- again in step I2, the feature of radio-communication channel may be the channel impulse response. The channel impulse response may be obtained in turn using ray-tracing or geometry-based stochastic model as a function of the respective positions of the carrier 10 and receiver 12. For example, document 3GPP TR38.901 describes a method for generating coefficient values suitable for representing the radio-communication channel as effective between transmitter and receiver.

Alternatively to the above-described probabilistic implementations of the invention, the mobility model function as provided in step I3 may result in a single mobility state value $s_{n+1}$ in step S2 instead of the probability distribution $p(s_{n+1}|s_n)$. Put another way, the mobility model function determines the mobility state $s_{n+1}$ from $s_n$ and possibly also from preceding mobility state values without ambiguity. If the connection provided in step I2 between the radio-communication channel and the mobility state is also deterministic, then step S3 results in outputting a single value for $Z_{n+1}$.

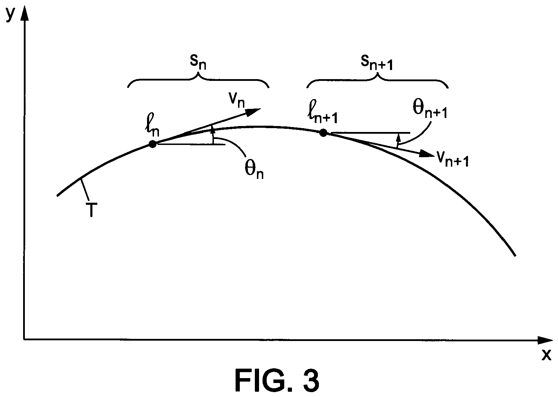

Mobility model functions are now provided for two examples in the domain of road traffic. Figure 3 shows the trajectory T of a road vehicle acting as the carrier 10 in a two-dimensional frame with cartesian coordinates x and y. $l_n$, $v_n$ and $\theta_n$, $a_n$ and $\psi_n$ are respectively the two-dimensional position, velocity and motion angle relative to x-axis, the acceleration and direction variation rate at time instant $t_n$, and $l_{n+1}$, $v_{n+1}$, $\theta_{n+1}$, $a_{n+1}$ and $\psi_{n+1}$ the values for the same components at time instant $t_{n+1}$. Position $l_n$ (respectively $l_{n+1}$), velocity $v_n$ (resp. $v_{n+1}$) and angle $\theta_n$ (resp. $\theta_{n+1}$) together constitute the mobility state value $s_n$ (resp. $s_{n+1}$) related to time instant $t_n$ (resp. $t_{n+1}$).

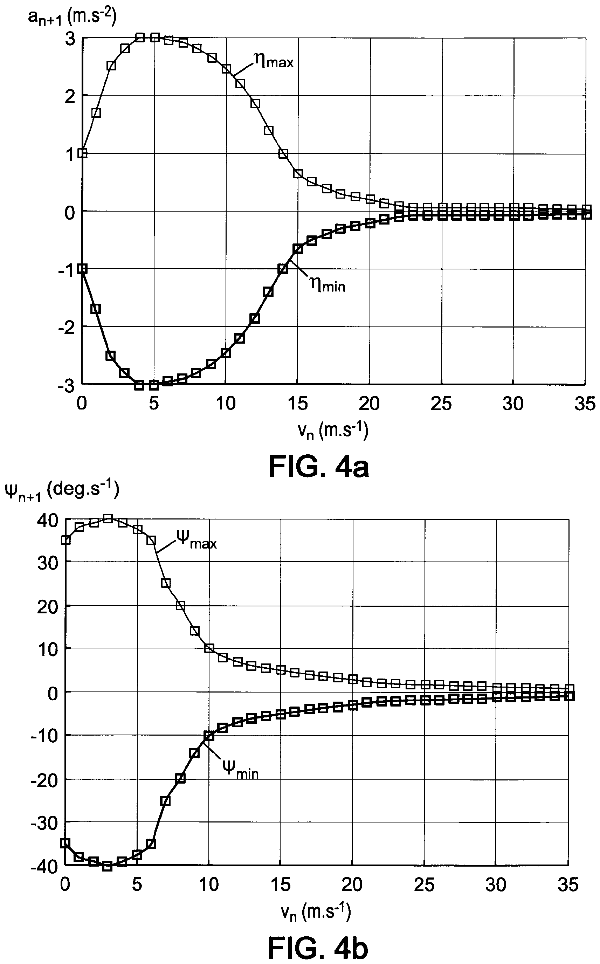

Figures 4a and 4b together illustrate a mobility model function suitable when the vehicle 10 travels along a regular road portion. Empirical observations show that acceleration and direction variation for the vehicle 10 can be more important when the current driving velocity is low, and are limited for high current driving velocity. This corresponds to two driver's behaviour types, typically for current velocity being lower or higher than 7-14 m·s$^{-1}$ (meter per second) respectively. The diagram of Figure 4a shows a range so-limited for the acceleration, and the diagram of Figure 4b shows another range effective for the direction variation. Then, a probability distribution for the acceleration $a_{n+1}$ may be uniform between both values $\eta_{min}(v_n)$ and $\eta_{max}(v_n)$ as provided by the diagram of Figure 4a, and noted $U(\eta_{min}(v_n), \eta_{max}(v_n))$. Similarly, another probability distribution for a rate $\psi_{n+1}$ relating to the direction variation may be uniform between both values $\psi_{min}(v_n)$ and $\psi_{max}(v_n)$ as provided by the diagram of Figure 4b: $U(\psi_{min}(v_n), \psi_{max}(v_n))$. The horizontal axis of both diagrams identifies $v_n$-values in m·s$^{-1}$, the vertical axis in Figure 4a identifies $a_{n+1}$-values in m·s$^{-2}$ (meter per second squared), and that of Figure 4b identifies $\psi_{n+1}$-values in deg·s$^{-1}$ (degree per second). Then, the mobility model function may be:

$$\begin{cases} a_{n+1} \text{ desbribed by } U\big(\eta_{min}(v_n), \eta_{max}(v_n)\big) \\ \psi_{n+1} \text{ desbribed by } U\big(\psi_{min}(v_n), \psi_{max}(v_n)\big) \\ \theta_{n+1} = \theta_n + \psi_{n+1} \cdot (t_{n+1} - t_n) \\ v_{n+1} = v_n + a_{n+1} \cdot (t_{n+1} - t_n) \\ l_{n+1} = l_n + v_{n+1} \cdot (t_{n+1} - t_n) * [\cos(\theta_{n+1}),\ \sin(\theta_{n+1})]^T \end{cases}$$

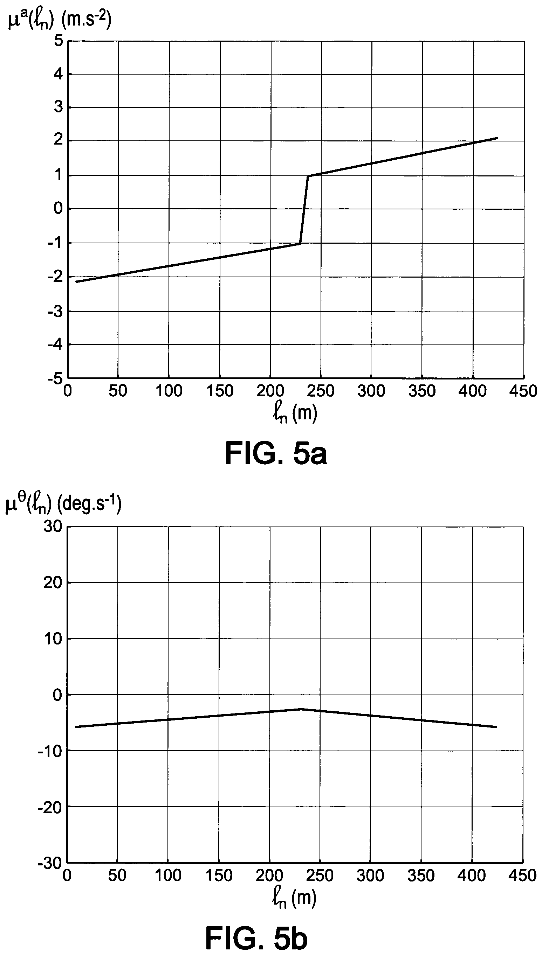

Figures 5a and 5b together illustrate another mobility model function suitable when the vehicle 10 travels along a highway exit portion. Commonly, such highway exit portion forms a curve with almost constant direction change, and any vehicle traveling along such highway exit portion first decelerate and then re-accelerate. Because the velocity as well as the acceleration may vary depending on the driver's behavior and/or the vehicle type, gaussian random variables may be adopted to model the acceleration and direction variation rate: the acceleration is to meet the gaussian probability distribution $N(\mu^a(l_n), \sigma_a^2)$ with mean value $\mu^a(l_n)$ and standard deviation $\sigma_a$, and the direction variation rate meets the gaussian probability distribution $N(\mu^\theta(l_n), \sigma_\theta^2)$ with mean value $\mu^\theta(l_n)$ and standard deviation $\sigma_\theta$. Both mean values $\mu^a(l_n)$ and $\mu^\theta(l_n)$ depend on the vehicle's position in the highway exit portion, while the standard deviations $\sigma_a$ and $\sigma_\theta$ might be fixed. The diagrams of Figure 5a and 5b show possible variations to be respectively adopted for the mean values $\mu^a(l_n)$ and $\mu^\theta(l_n)$ as functions of the vehicle position in the highway exit portion. The horizontal axis of both diagrams of Figures 5a and 5b identifies $l_n$-values in m (meter), the vertical axis in Figure 5a identifies $n^a(l_n)$-values in m·s$^{-2}$, and that of Figure 5b identifies $\mu^\theta(l_n)$-values in deg·s$^{-1}$. Transition from deceleration to re-acceleration occurs after about 230 m in the highway exit portion, corresponding to a change in the curve angle rate approximately at the same location. The direction variation values are of constant sign, negative in the example, because of the curve turning right. With such conditions, the mobility model function may be:

$$\begin{cases} a_{n+1} \text{ described by } N(\mu^a(l_n), \sigma_a^2) \\ \psi_{n+1} \text{ described by } N(\mu^\theta(l_n), \sigma_\theta^2) \\ \theta_{n+1} = \theta_n + \psi_{n+1} \cdot (t_{n+1} - t_n) \\ v_{n+1} = v_n + a_{n+1} \cdot (t_{n+1} - t_n) \\ l_{n+1} = l_n + v_{n+1} \cdot (t_{n+1} - t_n) * [\cos(\theta_{n+1}),\ \sin(\theta_{n+1})]^T \end{cases}$$

For such road traffic application examples, the receiver 12 may be an access point for radio-connection of the transmitter 11 to an external communication network, or a wayside radio unit, commonly referred to as WRU. Then, a radio-communication session is connecting the vehicle 10 to the receiver 12, and the information about the radio-communication channel $Z_{n+1}$ provided according to the invention is useful for dynamically adjusting parameters of the radio-communication session. Possibly, several receivers may be arranged along the road portion and the computing node connected for receiving measurement results from this plurality of receivers.

More generally, the radio-communication channel which is characterized in real time according to the invention while the carrier 10 is moving, may be useful for transmitting data between the transmitter 11 and the receiver 12. Put another way, the radio signals S contain data load which is useful during a communication session ongoing between transmitter 11 and receiver 12. The information obtained using the invention about the radio-communication channel at the target future time instant is useful for adjusting parameters of the radio-communication session.

But in possible alternative applications of the invention, the radio signals S that are emitted by the transmitter 11 onboard the carrier 10 are not intended to the receiver 12, but transmitted to any other recipient radio device. The radio signals S then produce interference for other communication sessions. Then, the invention may be useful for characterizing such radio interference, in particular for adjusting parameters of one or several of the other communication sessions.

The invention system comprising at least the receiver 12, the computing node 13 and optionally the database 14 for storing mobility model functions then forms a radio-detection system. Such radio-detection system may be useful for rendering radio-communications within a geographical zone more robust against intrusion of a transmitter-equipped carrier causing radio interference such as a flying drone.

Generally for possible implementations of the invention, at least one of the transmitter and receiver may be onboard a carrier of any type, including a road vehicle, an aircraft, a drone, a ship, a train, etc.

**Claims**

1. A method for providing information about a radio-communication channel existing between a transmitter (11) and a receiver (12) for a target future time instant, at least one of the transmitter and receiver being moving so that a pair formed by said transmitter and receiver transitions between successive mobility states while radio signals (S) are emitted by said transmitter, the method comprising the following steps:

   /1/ obtaining information about at least one current or past mobility state of the pair;
   /2/ from the information about the at least one current or past mobility state of the pair, and using a mobility model function relating to said pair, inferring information about a mobility state to occur for the pair at the target future time instant; and
   /3/ from the information about the mobility state to occur at the target future time instant, and using a connection between mobility state values possible for the pair and values of a feature of the radio-communication channel, inferring information about the feature of the radio-communication channel relating to the target future time instant.

2. The method of claim 1, wherein step /1/ comprises obtaining at least one measurement result about the radio-communication channel at a time value that corresponds to the current or past mobility state of the pair, and deriving the information relating to said at least one current or past mobility state of the pair from the at least one measurement result.

3. The method of claim 1 or 2, wherein the mobility model function used in step /2/ is suitable for determining a relation between the current or past mobility state of the pair and the mobility state of said pair at the target future time instant.

4. The method of claim 3, wherein the mobility model function used in step /2/ is obtained:

   either from a database (14),
   or from mobility state values relating to the pair and derived respectively from results of several measurements performed with the pair at several instant times,
   or from data read in a database (14) combined with mobility state values derived for the pair respectively from results of several measurements performed with the pair at several instant times.

5. The method of claim 4, wherein the measurements performed with the pair for deriving respective mobility state values in view of obtaining the mobility model function relate to the radio-communication channel as effective between the transmitter (11) and the receiver (12).

6. The method of one of the preceding claims, wherein the connection between the mobility states possible for the pair and the values of the feature of the radio-communication channel, as used in step /3/, is of one of the following types:

   - a path-loss function providing radio-attenuation values as a function of respective positions of the transmitter (11) and receiver (12), and combined with a statistical noise distribution;
   - a fingerprint map providing radio-attenuation values as a function of respective positions of the transmitter (11) and receiver (12);
   - a channel impulse response determined by modelling the radio-communication channel through ray-tracing as a function of respective positions of the transmitter (11) and receiver (12); and
   - a channel impulse response determined by using a geometry-based stochastic model for modelling the radio-communication channel as a function of respective positions and relative velocity of the transmitter (11) and receiver (12).

7. The method of one of the preceding claims, wherein

the information obtained in step /1/ about the at least one current or past mobility state of the pair comprises probability values for said pair to meet respective mobility state values at a current or past time value;

the information inferred in step /2/ about the mobility state to occur for the pair at the target future time instant comprises probability values for said pair to meet respective mobility state values at said target future time value; and

the information inferred in step /3/ about the feature of the radio-communication channel relating to the target future time instant comprises probability values for said feature to meet respective feature values at said target future time value.

8. The method of one of the preceding claims, wherein each mobility state of the pair comprises at least one of respective positions of the transmitter (11) and receiver (12), a relative position of the transmitter and receiver, at least one of a respective velocity component and velocity angle of the transmitter and receiver, at least one of a relative velocity component and relative velocity angle of the transmitter and receiver, respective accelerations of the transmitter and receiver, a relative acceleration of the transmitter and receiver, respective direction variation rates of the transmitter and receiver, and a variation rate of a relative direction of the transmitter and receiver.

9. The method of one of claims 1 to 8, wherein the radio signals (S) contain data sent by the transmitter (11) to the receiver (12), said data being useful to an operator or a data-processing device from an output of said receiver.

10. The method of claim 9, wherein the transmitter (11) is on board a vehicle traveling along a road portion,

and wherein the road portion is a regular road portion, and the mobility model function used in step /2/ is based on physics laws and driver's behaviour principles related to regular-speed driving,

or wherein the road portion is a highway exit portion, and the mobility model function used in step /2/ is based on physics laws, at least one deceleration-then-acceleration profile and at least one motion-angle profile, both profiles as respective functions of a traveling distance in the highway exit portion.

11. The method of one of claims 1 to 8, wherein the receiver (12) is part of a radio-detection system used for monitoring radio interference originating from a transmitter-equipped carrier (10), the radio signals (S) being emitted by the transmitter (11) onboard the carrier and causing the radio interference.

12. A system for providing information about a radio-communication channel existing between a transmitter (11) and a receiver (12), said system comprising at least the receiver and a computing node (13) configured for executing a method of one of claims 1 to 8.

13. The system of claim 12, configured for executing the method of one of claims 1 to 7 during an ongoing communication session shared by the transmitter (11) and the receiver (12), and for adjusting at least one parameter of the communication session based on the information inferred for the target future time instant about the feature of the radio-communication channel.

14. The system of claim 12, forming a radio-detection system suitable for sensing radio emission originating from a transmitter-equipped carrier (10), and providing information for the target future time instant about radio interference caused by the transmitter-equipped carrier to ongoing radio-communication sessions.

**FIG. 1**

FIG. 2

**FIG. 3**

FIG. 4a

FIG. 4b

FIG. 5a

FIG. 5b

**EP 4 633 067 A1**

# EUROPEAN SEARCH REPORT

**Application Number**

EP 24 29 0009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BENJAMIN SLIWA ET AL: "Boosting Vehicle-to-cloud Communication by Machine Learning-enabled Context Prediction", ARXIV.ORG, CORNELL UNIVERSITY LIBRARY, 201 OLIN LIBRARY CORNELL UNIVERSITY ITHACA, NY 14853, 23 April 2019 (2019-04-23), XP081444250, DOI: 10.1109/TITS.2019.2930109 * pages 2,4,5 * * pages 6,12; figure 5 * | 1-14 | INV. H04B17/373 H04B17/391 H04W64/00 H04W84/00 H04L25/02 |
| X | EP 4 106 216 A1 (VOLKSWAGEN AG [DE]; SEAT SA [ES]) 21 December 2022 (2022-12-21) * paragraphs [0050] - [0057] * | 1-14 | |
| A | US 2021/273829 A1 (BJORSELL JOACHIM [FR] ET AL) 2 September 2021 (2021-09-02) * paragraphs [0103] - [0115] * | 1-14 | |

**TECHNICAL FIELDS SEARCHED (IPC)**

H04B
H04W
H04L

The present search report has been drawn up for all claims

| Place of search | Date of completion of the search | Examiner |
|---|---|---|
| The Hague | 16 September 2024 | Ntogari, Georgia |

## ANNEX TO THE EUROPEAN SEARCH REPORT
## ON EUROPEAN PATENT APPLICATION NO.

EP 24 29 0009

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | | Publication date | Patent family member(s) | | Publication date |
|---|---|---|---|---|---|
| EP 4106216 | A1 | 21-12-2022 | NONE | | |
| US 2021273829 | A1 | 02-09-2021 | EP | 3811532 A1 | 28-04-2021 |
| | | | FR | 3081640 A1 | 29-11-2019 |
| | | | US | 2021273829 A1 | 02-09-2021 |
| | | | WO | 2020002803 A1 | 02-01-2020 |

EPO FORM P0459

For more details about this annex : see Official Journal of the European Patent Office, No. 12/82